# EUROPÄISCHE PATENTANMELDUNG

(11) **EP 2 407 425 A1**
(43) Veröffentlichungstag der Anmeldung: **18.01.2012**
(21) Anmeldenummer: 10169272.1
(22) Anmeldetag: 12.07.2010
(51) Int. Cl.: C01B 33/44

(54) **Verfahren zur Herstellung hochreiner, organisch modifizierter Schichtsilikate**

(71) Anmelder: Bayer Technology Services GmbH, 51368 Leverkusen (DE)
(72) Erfinder: Dr. Norwig, Jochen, 51375 Leverkusen (DE); Spiale, Ralf, 51371, Leverkusen (DE); Aßmuth, Wolfgang, 51467, Bergisch Gladbach (DE); Dr. Egger, Holger, 51067, Köln (DE)

(57) **Zusammenfassung**

Die vorliegende Erfindung betrifft ein neuartiges Verfahren um organisch modifizierte Schichtsilikate in hoher Reinheit herzustellen. Das erfindungsgemäße Verfahren verwendet hierzu Ionenaustauscherharze.

## Beschreibung

Die vorliegende Erfindung betrifft ein neuartiges Verfahren um organisch modifizierte Schichtsilikate in hoher Reinheit herzustellen. Das erfindungsgemäße Verfahren verwendet hierzu Ionenaustauscherharze.

Schichtsilikate oder Tonminerale sind eine Untergruppe der Silikatmineralien. In Schichtsilikaten liegen unter anderem SiO₄-Tetraeder zu Schichten mit der Zusammensetzung Si₂O₅ vernetzt vor.

Weiter liegen diese Tetraederschichten in den vorgenannten Schichtsilikaten mit sogenannten Oktaederschichten im Wechsel vor. In diesen sogenannten Oktaederschichten liegen Kationen umgeben von Hydroxidionen und/oder Sauerstoff in Oktaederanordnung vor. Solche Kationen sind üblicherweise die positiv geladenen Ionen des Aluminiums und/oder des Magnesiums. Die vorgenannten Schichten bilden den Grund für die Bezeichnung als Schichtsilikate im Unterschied zu anderen Silikaten.

Man unterscheidet üblicherweise zwischen Zweischichtsilikaten, wie beispielsweise Kaolinit oder Serpentin, und Dreischichtsilikaten, wie beispielsweise Montmorillonit oder Glimmer. In Zweischichtsilikaten ist jeweils eine Tetraederschicht mit einer Oktaederschicht verbunden, in den Dreischichtsilikaten eine Oktaederschicht mit zwei Tetraederschichten verbunden.

Durch die vorgenannten Schichten entstehen im Schichtsilikat zweidimensionale Strukturen, die untereinander durch elektrostatische Wechselwirkung zusammengehalten werden. Die eigentlichen Schichten sind selber meist partiell negativ geladen und die Ladungen werden durch Kationen in den Zwischenräumen der jeweiligen Schichten ausgeglichen. Diese Kationen sind zu unterscheiden von den vorgenannten Kationen in den Oktaederschichten. Viele Schichtsilikate können in Wasser gut gequollen und dispergiert werden. Diesen Prozess bezeichnet man auch als Exfolierung.

Die Kationen in den Zwischenräumen der jeweiligen Schichten sind nicht fest in die Struktur der Schichtsilikate eingebunden und lassen sich demnach beispielsweise durch andere positiv geladene Verbindungen austauschen, so dass insbesondere die Oberflächen der Schichtsilikate vergleichsweise einfach mit organischen Verbindungen modifizierbar sind, wenn diese eine positive Ladung aufweisen. Die Kationen in den Zwischenräumen der jeweiligen Schichten sind üblicherweise positiv geladene Ionen des Natriums. Die Anzahl an austauschbaren Kationen der Zwischenräume der jeweiligen Schichten wird mit Hilfe der sogenannten Kationenaustauschkapazität (kurz: CEC; vgl. G. Lagaly, Kapitel 3.1 "lonenaustausch" in "Tonmimerale und Tone", Hrsg. K. Jasmund, G. Lagaly, Steinkopff Verlag Darmstag, 1993, ISBN 3-7985-0923-9) angegeben. Diese Größe ist keine Konstante und kann von Schichtsilikattyp zu Schichtsilikattyp variieren. CEC wird üblicherweise in meq Ladung pro g Schichtsilikat angegeben.

Als andere positiv geladene Verbindungen, die die Kationen in den Zwischenräumen der jeweiligen Schichten ersetzen und damit das Schichtsilikat modifizieren sollen, werden häufig Trimethylalkylammonium-Verbindungen verwendet.

Durch die Verwendung von Trimethylalkylammonium-Verbindungen zum Ersatz der Kationen in den Zwischenräumen der jeweiligen Schichten erzielt man deutlich hydrophobere Schichtsilikate. Die somit organisch modifizierten Schichtsilikate können bei geeigneter Auswahl des Alkyls der Trimethylalkylammonium-Verbindung auch zu organischen Medien verträglich gemacht werden, in denen sie normalerweise durch ihre hydrophilen Eigenschaften nur schwer dispergierbar wären.

Solche geeignet organisch modifizierten Schichtsilikate werden oft als Füllstoff in Polymere eindispergiert, um diese etwa mechanisch zu verstärken, die Barriereeigenschaften gegen Gas oder Chemikalien zu erhöhen oder die Flammschutzeigenschaften der Polymere zu verbessern. Vielfach gelingt auch eine Verbesserung mehrerer Eigenschaften des Polymers gleichzeitig.

Die nach dem Stand der Technik üblicherweise eingesetzten Verfahren zur Herstellung organisch modifizierter Schichtsilikate sind dadurch gekennzeichnet, dass das zu modifizierende Schichtsilikatmaterial in einer wässrigen Lösung dispergiert wird und anschließend die organische, positiv geladene Verbindung, mit der das Schichtsilikat modifiziert werden soll, hinzugegeben wird. Die organische, positiv geladene Verbindung, mit der das Schichtsilikat modifiziert werden soll, adsorbiert sodann an die Oberfläche des Schichtsilikats, bis alle Ladungen ausgeglichen sind, was man gemeinhin abwartet. Die entstandene Suspension des dann organisch modifizierten Schichtsilikats wird hiernach üblicherweise gereinigt, getrocknet und als Feststoff weiterverarbeitet.

Ein solches Verfahren beschreiben beispielsweise Muh S. Wang and Thomas J. Pinnavaia in "Clay-Polymer Nanocomposites Formed from Acidic Derivatives of Montmorillonite and an Epoxy Resin" (Chem. Mat. 1994 (6), 468-474). Hierin wird Na⁺-Montmorillonit als Schichtsilikat mit verschiedenen positiv geladenen organischen Verbindungen, hierunter z.B. protonierte Aminocarboxylsäuren, primäre Diamine und primäre Amine, modifiziert. Wie gerade beschrieben, wird hierbei stets eine Lösung der vorgenannten Stoffe hergestellt und in diese Lösung das Schichtsilikat dispergiert. Nach dem Austausch der Kationen im Schichtsilikat durch die vorgenannten Stoffe wird die Dispersion zentrifugiert und mehrfach mit deionisiertem Wasser gewaschen, bevor diese durch Gefriertrocknung getrocknet und im Folgenden in einem Epoxidharz weiter verwendet werden.

Nachteil dieses Verfahrens, wie auch der übrigen bekannten Verfahren zur Herstellung von organisch modifizierten Schichtsilikaten ist die Tatsache, dass diese jeweils einen oder zumeist sogar mehrere Reinigungsschritte umfassen. Im vorgenannten Fall ist dies ein mehrfaches Waschen der organisch modifizierten Schichtsilikate mit deionisiertem Wasser.

Im Stand der Technik hat sich diese Verfahrensweise allgemein etabliert, weil die später in den Polymeren verwendeten organisch modifizierten Schichtsilikate möglichst frei von Verunreinigungen, insbesondere den Kationen, die vormals in den Zwischenräumen der Schichten der Schichtsilikate vorlagen und Resten an positiv geladenen organischen Verbindungen und deren Gegenionen sein sollen.

Solche Verunreinigungen führen in den Polymeren, in die die organisch modifizierten Schichtsilikate später eingebracht werden sollen, zu einer Vielzahl möglicher unerwünschter Effekte. So können diese Verunreinigungen den chemischen Abbau des Polymers induzieren oder katalysieren, gegebenenfalls ansonsten transparente Polymere eintrüben und die chemische und/oder mechanische Stabilität des Polymers verringern. Diese Liste ist in Abhängigkeit von den Eigenschaften und der chemischen Zusammensetzung des Polymers beliebig fortsetzbar.

Demnach ist es ein Erfordernis der späteren Verwendung der organisch modifizierten Schichtsilikate, dass diese möglichst rein sind. Wie gerade dargestellt, wird dies im Stand der Technik durch eine Vielzahl mehr oder minder aufwändiger Reinigungsschritte im Anschluss an die Herstellung der organisch modifizierten Schichtsilikate erreicht. Dies ist alleine deshalb schon nachteilig, weil hierdurch das organisch modifizierte Schichtsilikat in seiner Herstellung vergleichbar teuer wird. Unter anderem ist gerade die Reinigung unter mehrfachem Waschen mit deionisiertem und/oder destilliertem Wasser schädlich für die Umwelt, denn die Herstellung deionisierten und/oder destillierten Wassers bedarf eines beträchtlichen Energieaufwandes, und das Waschwasser ist hiernach vielfach als chemischer Abfall zu entsorgen, mindestens aber separat zu behandeln.

Ausgehend von vorgenannten Nachteilen des Standes der Technik besteht also die Aufgabe, ein möglichst einfaches Verfahren zur Herstellung von organisch modifizierten Schichtsilikaten zur Verfügung zur stellen, in dem auf eine nachfolgende Reinigung der Schichtsilikate nach deren organischer Modifikation verzichtet werden kann.

Es wurde nun überraschend gefunden, dass ein Verfahren zur Herstellung organisch modifizierter Schichtsilikate durch Dispergieren von Schichtsilikaten in einem Lösungsmittel umfassend mindestens ein organisches Molekül mit mindestens einfacher positiver Ladung, dadurch gekennzeichnet, dass in dem vorgenannten Lösungsmittel auch Partikel eines Ionenaustauscherharzes dispergiert werden, diese Aufgabe zu lösen vermag.

Das erfindungsgemäße Verfahren ist insbesondere deshalb besonders vorteilhaft, weil durch das weitere Vorliegen der vorgenannten Partikel eines Ionenaustauscherharzes die ansonsten gelösten Ionen nahezu quantitativ gegen Wasserstoffionen ausgetauscht werden, während diese Ionen dann im Ionenaustauscherharz gebunden werden. Damit entfallen zusätzliche Waschschritte. Die Wasserstoffionen sind unschädlich und werden vor allem im Zuge eines eventuellen späteren Trocknungsschrittes automatisch mit entfernt.

Im Rahmen der vorliegenden Erfindung werden unter Schichtsilikaten alle Tonminerale verstanden, welche aus [M(O,OH)₆]-Oktaederschichten aufgebaut sind, die mit je ein oder zwei [SiO₄]-Tetraederschichten kondensiert sind. M bezeichnet hierbei Ionen von Metallen gemäß dem Periodensystem der Elemente. Bevorzugt sind Ionen der Metalle ausgewählt aus der Liste bestehend aus den Metallen der Zweiten Hauptgruppe des Periodensystems der Elemente, Metallen der Ordnungszahl 13, sowie von 22 bis 30 im Periodensystem der Elemente und Silizium.

Bevorzugte Schichtsilikate sind jene ausgewählt aus der Liste bestehend aus Serpentinen, Kaolinen, Talk, Pyrophylliten, Smectiten, Vermiculiten, Illiten, Glimmer und Sprödglimmer. Besonders bevorzugt sind jene ausgewählt aus der Liste bestehend aus Talk, Pyrophylliten, Smectiten, Vermiculiten, Illiten, Glimmer und Sprödglimmer. Ganz besonders bevorzugt sind Smectite. Zu den Smectiten zählen auch die Montmorillonite, welche im Rahmen der vorliegenden Erfindung insbesondere bevorzugte Schichtsilikate sind.

Unter dem erfindungsgemäßen Dispergieren der Schichtsilikate in einem Lösungsmittel wird das möglichst feine Verteilen der Schichtsilikate verstanden, wobei die Schichtsilikate bevorzugt vollständig exfoliert werden. Das Dispergieren erfolgt üblicherweise durch Rühren, Schütteln, Ultraschallbehandlung, Nassmahlen oder mit Hilfe anderer geeigneter mechanischer Gerätschaften wie sie dem Fachmann allgemein bekannt sind.

Lösungsmittel bezeichnet im Zusammenhang mit der vorliegenden Erfindung jedes wässrige Medium oder organische Medium. D.h. Lösungsmittel, die im Rahmen der vorliegenden Erfindung Verwendung finden können, sind beispielsweise die dem Fachmann allgemein bekannten organischen Lösungsmittel und Wasser, ionische Flüssigkeiten sowie beliebige Mischungen dieser untereinander und/oder Lösungen dieser.

Bevorzugte Lösungsmittel im Rahmen der vorliegenden Erfindung sind Wasser oder ionische Flüssigkeiten.

Besonders bevorzugt sind hierbei ionische Flüssigkeiten, die unter Umgebungsbedingungen (1013 hPa, 23°C) in flüssigem Aggregatzustand vorliegen und bei denen das Kation organisch ist.

Solche ionische Flüssigkeiten sind durch ihre Natur als Salze flüssigen Aggregatzustands besonders vorteilhaft, weil diese als Lösungsmittel dienen, zugleich aber auch mit dem vorgenannten organischen Kation ein organisches Molekül mit mindestens einfacher positiver Ladung umfassen, das zur Modifikation der Schichtsilikate eingesetzt werden kann.

Nicht abschließende Beispiele für ionische Flüssigkeiten, die im Rahmen der vorliegenden Erfindung vorteilhaft verwendbar sind, sind solche mit einem Kation, wie es nachstehend im Zusammenhang mit den organischen Molekülen mit mindestens einfacher positiver Ladung als Mitglied der Gruppe der Pyridinium- und Imidazoliumionen offenbart wird. Üblicherweise haben solche ionischen Flüssigkeiten ein Halogenanion.

Die Verwendung von Wasser als Lösungsmittel ist gleichfalls vorteilhaft, weil Wasser etwa durch destillative und/oder Membrantrennverfahren in einfacher und allgemein bekannter Weise gereinigt und dem Verfahren wieder zugeführt werden kann.

Der Anteil an Schichtsilikat im Lösungsmittel gemäß dem erfindungsgemäßen Verfahren kann im Bereich von 0,1 bis 50 Gew.-%, bevorzugt im Bereich von 1 bis 20 Gew.-%, besonders bevorzugt im Bereich von 5 bis 10 Gew.-% liegen.

Organische Moleküle mit mindestens einfacher positiver Ladung sind bevorzugt solche organischen Moleküle, die bei einem pH-Wert von kleiner oder gleich 4 mindestens einfach positiv geladen sind. Es ist demnach bevorzugt, wenn das erfindungsgemäße Verfahren in Lösungsmitteln eines pH-Werts von kleiner oder gleich 4 ausgeführt wird.

Dies kann etwa erreicht werden, indem das Lösungsmittel mit Salzsäure angesäuert wird. Dem Fachmann ist allgemein bekannt, wie er dies erreichen kann. Gleichsam sind ihm auch Alternativen zur Salzsäure bekannt, mit denen er dies in Abhängigkeit des jeweiligen Lösungsmittels erreichen kann.

Besonders bevorzugt sind solche organischen Moleküle mit mindestens einer einfachen positiven Ladung, in denen die positive Ladung durch mindestens eine quaternäre Ammoniumgruppe hervorgerufen wird.

Solche, auch Alkylammoniumverbindungen genannten Stoffe, sind üblicherweise jene der allgemeinen Formel (N R¹R²,R³,R⁴)⁺, bei denen
R¹, R², R³ und R⁴ unabhängig voneinander jeweils für C₁ - C₁₈-Alkyl stehen, gegebenenfalls durch ein oder mehrere Sauerstoffatome unterbrochenes C₂ - C₁₈-Alkyl, so z.B. 1-10 Ethylenoxideinheiten, C₆ - C₁₂-Aryl, C₅ - C₁₂-Cycloalkyl, wobei die genannten Reste jeweils durch funktionelle Gruppen, Aryl, Alkyl, Aryloxy, Alkyloxy, Halogen, Heteroatome und/oder Heterocyclen substituiert sein können und/oder 1-4 Doppelbindungen tragen können.
R¹, R², R³ und R⁴ können zusätzlich dazu Wasserstoff bedeuten.
R¹, R², R³ und R⁴ können darüber hinaus C₁ - C₁₈ -Alkyloyl (Alkylcarbonyl), C₁ - C₁₈-Alkyloxycarbonyl, C₅-C1₂₋Cycloalkylcarbonyl oder C₆- C₁₂-Aryloyl (Arylcarbonyl) bedeuten, wobei die genannten Reste jeweils durch funktionelle Gruppen, Aryl, Alkyl, Aryloxy, Alkyloxy, Halogen, Heteroatome und/oder Heterocyclen substituiert sein können.

Gegebenenfalls durch funktionelle Gruppen, Aryl, Alkyl, Aryloxy, Alkyloxy, Halogen, Heteroatome und/oder Heterocyclen substituiertes C₁ - C₁₈-Alkyl steht dabei beispielsweise für Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, α,α-Dimethylbenzyl, Benzhydryl, p-Toluylmethyl, 1-(p-Butylphenyl)ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxan-2-y1, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1 , 1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl und,
gegebenenfalls durch ein oder mehrere Sauerstoffatome unterbrochenes C₂ - C₁₈ -Alkyl steht dabei beispielsweise für 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4, 8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxanonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl, und
funktionelle Gruppen steht dabei beispielsweise für Carboxy, Carboxamid, Hydroxy, Di-(C₁-C₄-alkyl)-amino, C₁-C₄- Alkyloxycarbonyl, Cyano oder C₁-C₄ -Alkyloxy, und
gegebenenfalls durch funktionelle Gruppen, Aryl, Alkyl, Aryloxy, Alkyloxy, Halogen, Heteroatome und/oder Heterocyclen substituiertes C₆ - C₁₂-Aryl steht dabei beispielsweise für Phenyl, Toluyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-oder 4-Nitrophenyl, 2,4- oder 2,6-Dinitrophenyl, 4-Dimethylaminophenyl, 4-Acetylphenyl, Methoxyethylphenyl oder Ethoxymethylphenyl, und
gegebenenfalls durch funktionelle Gruppen, Aryl, Alkyl, Aryloxy, Alkyloxy, Halogen, Heteroatome und/oder Heterocyclen substituiertes C₅ - C₁₂-Cycloalkyl steht dabei beispielsweise für Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl, und
C₁ bis C₄-Alkyl steht dabei beispielsweise für Methyl, Ethyl, Propyl, Isopropyl, n-Butyl, sec-Butyl oder tert.-Butyl, und
C₁ - C₁₈ -Alkyloyl (Alkylcarbonyl) steht dabei beispielsweise für Acetyl, Propionyl, n-Butyloyl, sec-Butyloyl, tert.-Butyloyl, 2-Ethylhexylcarbonyl, Decanoyl, Dodecanoyl, Chloracetyl, Trichloracetyl oder Trifluoracetyl, und
C₁ - C₁₈ - Alkyloxycarbonyl steht dabei beispielsweise für Methyloxycarbonyl, Ethyloxycarbonyl, Propyloxycarbonyl, Isopropyloxycarbonyl, n-Butyloxycarbonyl, sec-Butyloxycarbonyl, tert.-Butyloxycarbonyl, Hexyloxycarbonyl, 2-Ethylhexyloxycarbonyl oder Benzyloxycarbonyl, und
C₅ - C₁₂ - Cycloalkylcarbonyl steht dabei beispielsweise für Cyclopentylcarbonyl, Cyclohexylcarbonyl oder Cyclododecylcarbonyl, und
C₆ - C₁₂ -Aryloyl (Arylcarbonyl) steht dabei beispielsweise für Benzoyl, Toluyl, Xyloyl, α-Naphthoyl, β-Naphthoyl, Chlorbenzoyl, Dichlorbenzoyl, Trichlorbenzoyl oder Trimethylbenzoyl.

Bevorzugt stehen R¹, R², R³ und R⁴ unabhängig voneinander für Wasserstoff, Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Dimethylamino, Diethylamino und Chlor.

Bevorzugt steht R⁴ für Methyl, Ethyl, n-Butyl, 2-Hydroxyethyl, 2-Cyanoethyl, 2-(Methoxycarbonyl)-ethyl, 2-(Ethoxycarbonyl)-ethyl, 2-(n-Butoxycarbonyl)-ethyl, Acetyl, Propionyl, t-Butyryl, Methoxycarbonyl, Ethoxycarbonyl oder n-Butoxycarbonyl.

Ebenfalls besonders bevorzugt sind solche organischen Moleküle mit mindestens einer einfachen positiven Ladung, in denen die positive Ladung durch mindestens eine Phosphoniumgruppe hervorgerufen wird.

Solche sind üblicherweise jene der allgemeinen Formel (P R¹R²,R³,R⁴)⁺, bei denen unabhängig voneinander
R⁴ für Acetyl, Methyl, Ethyl oder n-Butyl und
R¹, R², und R³ für Phenyl, Phenoxy, Ethoxy und n-Butoxy stehen.

Gleichfalls besonders bevorzugt sind solche organischen Moleküle mit mindestens einer einfachen positiven Ladung, in denen die positive Ladung in einer heterocyclischen Verbindung vorliegt.

Unter diesen heterocyclischen Verbindungen sind Pyridinium- oder Imidazoliumionen bevorzugt.

Besonders bevorzugt sind Pyridinium- und Imidazoliumionen ausgewählt aus der Liste bestehend aus 1,2-Dimethylpyridinium, 1-Methyl-2-ethylpyridinium, 1-Methyl-2-ethyl-6-methylpyridiniuni, N-Methylpyridinium, 1-Butyl-2-methylpyridinium, 1-Butyl-2-ethylpyridinium, 1-Butyl-2-ethyl-6-methylpyridinium, n-Butylpyridinium, 1-Butyl-4-methylpyridinium, 1,3-Dimethylimidazolium, 1,2,3-Trimethylimidazolium, 1-n-Butyl-3-methylimidazolium, 1,3,4,5-Tetramethylimidazolium, 1,3,4-Trimethylimidazolium, 2,3- Dimethylimidazolium, 1-Butyl-2,3-dimethylimidazolium, 3,4-Dimethylimidazolium, 2-Ethyl-3,4-dimethylimidazolium, 3-Methyl-2-ethylimidazol, 3-Butyl-1-methylimidazolium, 3-Butyl-l-ethylimidazolium, 3-Butyl-1,2-dimethylimidazolium, 1,3-Di-n-butylimidazolium, 3-Butyl-1,4,5-trimetylimidazoliuin, 3-Butyl-1,4-dimethylimidazolium, 3-Butyl-2-methylimidazolium, 1,3-Dibutyl-2-methylimidazolium, 3-Butyl-4-methylimidazolium, 3-Butyl-2-ethyl-4-methylimidazolium und 3-Butyl-2-ethylimidazolium, 1-Methyl-3-octylimidazolium, 1-Decyl-3-methylimidazolium.

Die vorgenannten heterocyclischen Verbindungen sind zusammen mit Halogenanionen die vorher beschriebenen ionischen Flüssigkeiten, die im erfindungsgemäßen Verfahren bevorzugt verwendet werden können.

Ganz besonders bevorzugt sind solche organischen Moleküle mit mindestens einer einfachen positiven Ladung, in denen die positive Ladung durch mindestens eine quaternäre Ammoniumgruppe hervorgerufen wird und in denen R¹ bis R⁴ jeweils für C₁ - C₁₈-Alkyl steht.

Die organischen Moleküle mit mindestens einer einfachen positiven Ladung werden üblicherweise in einem CEC-Verhältnis im Bereich von 0,2 bis 1,5 meq/g, bevorzugt im Bereich von 0,5 bis 1,2 meq/g, besonders bevorzugt im Bereich von 0,95 bis 1,05 meq/g zugegeben.

In bevorzugten Ausführungsformen des erfindungsgemäßen Verfahrens sollte aber die Menge an zugegebenen organischen Molekülen mit mindestens einfacher positiver Ladung aus rein ökonomischen Gesichtspunkten im Bereich von etwa der CEC liegen.

Es ist demnach auch möglich, dass das erfindungsgemäße Verfahren so ausgeführt wird, dass eine Menge an organischen Molekülen mit mindestens einfacher positiver Ladung in Mengen im Bereich deutlich unterhalb der CEC zugegeben werden, wenn nur eine teilweise Modifikation des Schichtsilikats erfolgen soll. In jedem Fall wird auch hier durch die Zugabe der Ionenaustauscherharze verhindert, dass die damit aus den Schichtsilikaten herausgelösten Ionen das spätere Verfahrensprodukt verunreinigen.

Das Verhältnis von Schichtsilikat zu organischen Molekülen mit mindestens einfacher positiver Ladung ist im erfindungsgemäßen Verfahren innerhalb der oben angegebenen Bereiche überraschenderweise aber unerheblich. Durch die Anwesenheit des Ionenaustauscherharzes werden alle überschüssigen Ionen in vorteilhafter Weise wieder entfernt.

Unter Ionenaustauscherharzen werden im allgemein polymere Stoffe verstanden, die dazu in der Lage sind Kationen und/oder Anionen gegen Protonen (H⁺) und/oder Hydoxidionen (OH-) auszutauschen.

Auch wenn die vorliegende Erfindung sich auf den Einsatz von Ionenaustauscherharzen gemäß vorstehender Definition bezieht, so sind auch andere allgemein bekannte lonenaustauschermaterialien, wie etwa Zeolithe als Ionenaustauscher und somit als Ersatz von Ionenaustauscherharze verwendbar.

Demnach werden im Zusammenhang mit der vorliegenden Erfindung unter dem Begriff Ionenaustauscherharz auch nicht polymere Ionenaustauscher zusammengefasst verstanden.

Die Ionenaustauscherharze liegen erfindungsgemäß als Partikel vor, was besonders vorteilhaft ist, weil diese einfach etwa durch einen bevorzugt nach dem erfindungsgemäßen Verfahren ebenfalls ausgeführten Filtrationsschritt wieder abgetrennt werden können.

Das erfindungsgemäße Dispergieren der Partikel des Ionenaustauscherharzes kann zusammen mit dem Dispergieren der Schichtsilikate in dem Lösungsmittel erfolgen oder auch zeitlich getrennt. Des Weiteren kann das Dispergieren der Partikel des Ionenaustauscherharzes in dem Lösungsmittel unter absatzweisem Zugeben der Partikel des Ionenaustauscherharzes oder vollständigem Zugeben der Partikel des Ionenaustauscherharzes in einem Zuge erfolgen.

Um eine besonders einfache Trennung der Ionenaustauscherharze vom Lösungsmittel und von den dann organisch modifizierten Silikatmaterialien zu erreichen, ist es in dem erfindungsgemäßen Verfahren ebenfalls bevorzugt, wenn zwischen der mittleren Partikelgröße der Schichtsilikate und der mittleren Partikelgröße der Ionenaustauscherharze ein Faktor von mindestens 10 liegt.

Da die organischen modifizierten Schichtsilikate üblicherweise eine mittlere Partikelgröße im Bereich unterhalb von 5 µm aufweisen ist es besonders bevorzugt, wenn die Partikel der Ionenaustauscherharze eine mittlere Partikelgröße von mehr als 50 µm, ganz besonders bevorzugt mehr als 150 µm, insbesondere bevorzugt von mehr als 400 µm aufweisen.

Das erfindungsgemäße Verfahren wird üblicherweise bei gegenüber Raumtemperatur (23°C) erhöhter Temperatur, bevorzugt bei Temperaturen im Bereich von 30°C bis 95°C, besonders bevorzugt im Bereich von 60°C bis 90°C ausgeführt.

Das Verfahren wird des Weiteren üblicherweise absatzweise für eine Zeitraum im Bereich von 6 bis 24 Stunden ausgeführt.

Innerhalb der vorgenannten Zeiträume kann bei den vorgenannten Temperaturen üblicherweise von einem abgeschlossenen Modifikationsvorgang der Schichtsilikate und von einem ebenfalls abgeschlossenen Austauschvorgang durch die Ionenaustauscherharze ausgegangen werden.

Das erfindungsgemäße Verfahren wird dann insbesondere vorteilhaft, wenn das Ionenaustauscherharz nach dem Verfahren und nach seiner Abtrennung in einem weiteren, bevorzugt ausgeführten Verfahrensschritt regeneriert wird. Damit erzielt man eine besonders Ressourcen schonende Verfahrensweise.

Die mittels des erfindungsgemäßen Verfahrens und seinen bevorzugten Varianten erhaltenen modifizierten Schichtsilikate zeichnen sich durch eine besonders hohe Reinheit insbesondere Freiheit von Ionen aus und sind demnach besonders gut geeignet, um in Polymere eingearbeitet zu werden, da diese Polymere in Abwesenheit der vorgenannten Verunreinigungen ihre positiven Eigenschaften nicht verlieren.

In einer bevorzugten Weiterentwicklung des erfindungsgemäßen Verfahrens wird demnach nach der Herstellung organisch modifizierter Schichtsilikate durch Dispergieren von Schichtsilikaten in einem Lösungsmittel umfassend mindestens ein organisches Molekül mit mindestens einfacher positiver Ladung in Anwesenheit von einem Ionenaustauscherharz noch ein Trockenschritt angeschlossen und an diesen noch ein Schritt angeschlossen, in dem die somit getrockneten organisch modifizierten Schichtsilikate in ein Polymer eingearbeitet werden.

Das Einarbeiten der organisch modifizierten Schichtsilikate in das Polymer erfolgt mittels der dem Fachmann allgemein bekannten Methoden. Nicht abschließende Beispiele für solche allgemein bekannten Methoden sind etwa Extrudieren und/oder einfaches Einrühren in eine Polymerschmelze und/oder eine Lösungsmittel/Polymer-Mischung.

Das Einarbeiten der organisch modifizierten Schichtsilikate in das Polymer erfolgt üblicherweise in Anteilen im Bereich von 0,001 Gew.-% bis 50 Gew.-%. Bevorzugt im Bereich von 1 Gew.-% bis 10 Gew.-%.

Ein weiterer Gegenstand der vorliegenden Erfindung ist die Verwendung der gemäß dem erfindungsgemäßen Verfahren erhaltenen modifizierten Schichtsilikate zur Einarbeitung in Polymere.

Ein Polymertyp, der besonders empfindlich auf Verunreinigungen reagiert ist Polycarbonat. Polycarbonat reagiert auf Verunreinigungen von Zuschlagsstoffen in Form von Ionen durch einen Abbau der Polymerkettenlänge, was sich gemeinhin auch durch eine Eintrübung und/oder gelblich bräunliche Einfärbung des Polymers bemerkbar macht.

Bevorzugt ist demnach die Verwendung der gemäß dem erfindungsgemäßen Verfahren erhaltenen modifizierten Schichtsilikate zur Einarbeitung in Polycarbonat.

Dies ermöglicht die Nutzung der erhöhten Barriereeigenschaften gegen Gas oder Chemikalien durch die Zugabe von solchen modifizierten Schichtsilikaten, ohne hierbei den Nachteil des Polymerabbaus befürchten zu müssen. Darüber hinaus ist dies mittels dem erfindungsgemäßen Verfahren nun besonders einfach möglich.

Noch ein weiterer Gegenstand der vorliegenden Erfindung ist demnach ein Polymermaterial, bevorzugt Polycarbonatmaterial, in dem organisch modifizierte Schichtsilikate, die gemäß dem hier beschriebenen erfindungsgemäßen Verfahren erhalten wurden, eingearbeitet sind.

Die Erfindung wird nachfolgend anhand einer Figur näher erläutert.

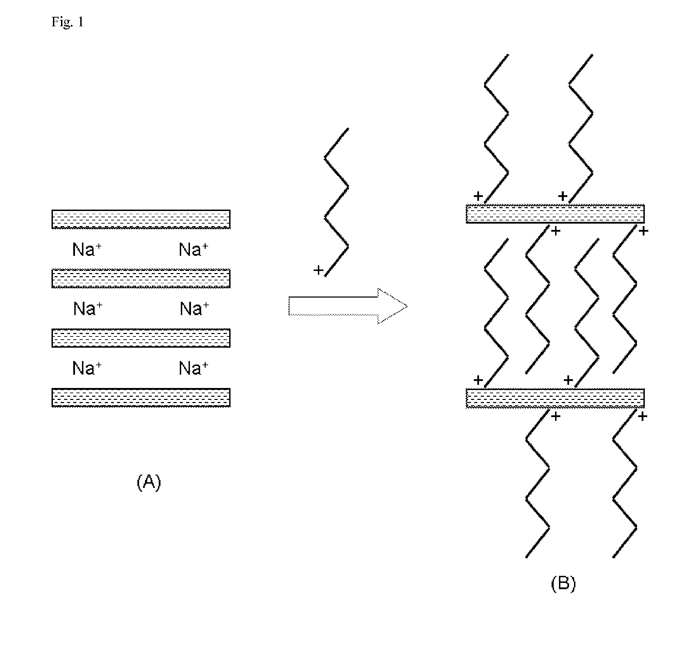

Die Fig. 1 zeigt schematisch ein erfindungsgemäßes Verfahren, in dem ein unmodifiziertes Schichtsilikat (A), in dessen Zwischenräumen der jeweiligen Schichten sich in diesem Fall ausschließlich Natriumionen befinden unter Verwendung eines einfach positiv geladenen Trimethylalkylammoniums organisch modifiziert wird. Die (nicht dargestellten) Partikel eines Ionenaustauscherharzes führen dazu, dass nachfolgend das modifizierte Schichtsilikat (B) in der Dispersion nach dem Abfiltrieren der Partikel des Ionenaustauscherharzes alleine und insbesondere nicht in Anwesenheit von Natriumionen vorliegt.

Die vorliegende Erfindung wird weiterhin anhand der nachfolgenden Beispiele näher erläutert, ohne sie hierauf zu beschränken.

### Beispiele

### Beispiel 1: Erfindungsgemäßes Verfahren

3 kg einer 5%igen Dispersion von natürlichem, unmodifiziertem Montmorillonit Schichtsilikat (PGV, Fa. Nordmann, Rassmann GmbH) in destilliertem Wasser wurden über Nacht im Schüttelbad geschüttelt.

In einem Dreihalskolben wurden 64.5 g einer Mischung von Stearylaminoethoxylaten der Formel (R)((CH₂CH₂O)ₓ)H)((CH₂CH₂O)_{y})H)N mit x + y = 2 und R = Stearyl (Genamin S020 Spezial, Fa. Clariant; CAS-No. 71786-60-2) in 700 ml destilliertem Wasser, welches unter Rühren mit konzentrierter Salzsäure auf einen pH-Wert von 2 eingestellt wurde, vorgelegt, und mittels eines Wasserbades auf 80°C erhitzt.

Die Schichtsilikat-Suspension wurde zugetropft, und hierbei der pH-Wert kontrolliert und bei Bedarf mit konz. Salzsäure nachgestellt, so dass der pH-Wert bei etwa 3 liegt. Die Mischung wurde bei 80°C für drei Stunden weiter gerührt. Anschließend wurde die Mischung unter Rühren langsam bis zur Raumtemperatur abgekühlt.

Die somit erhaltene Dispersion wurde durch Filtration über einen Rundfilter (Fa. Schleicher & Schuell, Typ: Whatman 602H) in eine Feststofffraktion und eine flüssige Fraktion getrennt und die feuchte Feststofffraktion wurde wieder in frischem destillierten Wasser aufgenommen.

Zu der erneut dispergierten Feststofffraktion wurde unter Rühren ein Ionentauscherharz (Lewatit UltraPure 1294 MD, Fa. Lanxess; 1:1 1 Mischung eines basischen Anionenaustauscherharzes und eines sauren Kationenaustauscherharzes) hinzugegeben, während man hierbei die Leitfähigkeit der Dispersion kontrollierte.

Die Zugabe wurde gestoppt, als die Leitfähigkeit auf einen Wert von etwa 4 µS/cm gesunken war. Schließlich wurde der Ionentauscher mit einem 400 µm Sieb abgetrennt.

### Beispiel 2: Weiteres erfindungsgemäßes Verfahren

Das erfindungsgemäße Verfahren wurde analog zu dem Beispiel 1 wiederholt, wobei aber im einzigen Unterschied hierzu das Hinzugeben des Ionenaustauscherharzes bereits zu der Dispersion vor der Filtration erfolgte. D.h. in die Reaktionslösung nach Modifikation wurde das Ionenaustauscherharz unmittelbar zugegeben. Der erste Filtrationsschritt entfiel hiermit.

### Beispiel 3: Noch weiteres erfindungsgemäßes Verfahren

Das erfindungsgemäße Verfahren wurde analog zu Beispiel 1 wiederholt, wobei aber im einzigen Unterschied hierzu an Stelle von 64.5 g einer Mischung aus Bis-(2-hydroxyethyl)-Alkylamin mit Alkylresten im Bereich von C₁₂ bis C₁₈ 340.2 g einer Substanz gemäß nachstehender Formel (1) (Jeffamine® M-2005 Amin; Firma Huntsman) eingesetzt wurden. 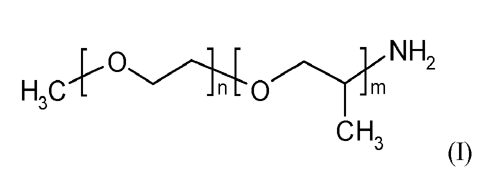 wobei 4≤*n*≤8 und 25≤*m*≤35

### Beispiel 4: Trocknen und Einbringen der modifizierten Schichtsilikate gem. Bsp. 3 in ein Polymer

Das erfindungsgemäß modifizierte Schichtsilikat aus Beispiel 3 wurde getrocknet und anschließend zusammen mit Polycarbonat (Makrolon 1140, Firma Bayer Material Science AG) extrudiert, so dass die Konzentration an modifiziertem Schichtsilikat 1 Gew.-% im Polymer betrug.

Anschließend wurde das erhaltene Material mittels Viskositätsmessungen auf den Molmassenabbau hin überprüft, der ein geeigneter Indikator für die Verträglichkeit und Reinheit des Schichtsilikatmaterials mit dem Polymer ist. Würde das Schichtsilikatmaterial einen hohen Anteil an Verunreinigungen insbesondere in Form von Natriumionen enthalten, so würde die Molmasse des Polymers (hier Polycarbonat, das diesbezüglich besonders empfindlich reagiert) nach dem Einbringen des Schichtsilikatmaterials signifikant gegenüber seinem Ursprungswert sinken. Eine Messmethode zur Bestimmung der Veränderung der Molmasse von Polycarbonat ist die Messung der dynamischen Viskosität vor und nach Behandlung des Polycarbonats.

Eine Messmethode zur Bestimmung der Veränderung der Molmasse von Polycarbonat ist die Messung der dynamischen Viskosität vor und nach Behandlung des Polycarbonats. Bei diesem Verfahren werden die Durchlaufzeiten eines gelösten Polymers durch ein Ubbelohde-Viskosimeter gemessen, um anschließend den Viskositätsunterschied zwischen Polymerlösung und seinem Lösungsmittel zu bestimmen. Daraus lässt sich unter Berücksichtigung der Massekonzentration der Polymerlösung die Viskositätszahl ermitteln. Die Viskositätszahl lässt sich mit der Molmasse eines Polymers korrelieren, so dass relative Werte erhalten werden.

Es ergab sich eine relative Viskosität von 1.312 im Vergleich zu 1.320 für das reine Polycarbonat. Demnach hat das Einbringen des erfindungsgemäß erzeugten, reinen Schichtsilikatmaterials die Molmasse des Polycarbonats nicht signifikant negativ beeinflusst.

## Patentansprüche

1. Verfahren zur Herstellung organisch modifizierter Schichtsilikate durch Dispergieren von Schichtsilikaten in einem Lösungsmittel umfassend mindestens ein organisches Molekül mit mindestens einfacher positiver Ladung, **dadurch gekennzeichnet, dass** in dem vorgenannten Lösungsmittel auch Partikel eines Ionenaustauscherharzes dispergiert werden.

2. Verfahren gemäß Anspruch 1, **dadurch gekennzeichnet, dass** das Lösungsmittel Wasser oder eine ionische Flüssigkeit ist.

3. Verfahren gemäß Anspruch 1 oder 2, **dadurch gekennzeichnet, dass** der Anteil an Schichtsilikat im Lösungsmittel im Bereich von 0,1 bis 50 Gew.-%, bevorzugt im Bereich von 1 bis 20 Gew.-%, besonders bevorzugt im Bereich von 5 bis 10 Gew.-% liegt.

4. Verfahren gemäß einem der vorstehenden Ansprüche, **dadurch gekennzeichnet, dass** es bei einem pH-Wert von kleiner oder gleich 4 ausgeführt wird.

5. Verfahren gemäß einem der vorstehenden Ansprüche, **dadurch gekennzeichnet, dass** das mindestens eine organische Molekül mit mindestens einer einfachen positiven Ladung ein organisches Molekül ist, in dem die positive Ladung durch mindestens eine quaternäre Ammoniumgruppe oder durch mindestens eine Phosphoniumgruppe hervorgerufen wird oder in dem die positive Ladung in einer heterocyclischen Verbindung vorliegt.

6. Verfahren gemäß Anspruch 5, **dadurch gekennzeichnet, dass** das mindestens eine organische Molekül mit mindestens einer einfachen positiven Ladung ein organisches Molekül ist, in dem die positive Ladung in einer heterocyclischen Verbindung in Form eines Pyridinium- oder Imidazoliumions vorliegt.

7. Verfahren gemäß einem der vorstehenden Ansprüche, **dadurch gekennzeichnet, dass** das mindestens eine organische Molekül mit mindestens einer einfachen positiven Ladung dem Lösungsmittel in einem CEC-Verhältnis im Bereich von 0,2 bis 1,5 meq/g, bevorzugt, im Bereich von 0,5 bis 1,2 meq/g, besonders bevorzugt im Bereich von 0,95 bis 1,05 meq/g zugegeben wird.

8. Verfahren gemäß einem der vorstehenden Ansprüche, **dadurch gekennzeichnet, dass** zwischen der mittleren Partikelgröße der Schichtsilikate und der mittleren Partikelgröße der Ionenaustauscherharze ein Faktor von mindestens 10 liegt.

9. Verfahren gemäß einem der vorstehenden Ansprüche, **dadurch gekennzeichnet, dass** ein Trockenschritt und an diesen noch ein Schritt angeschlossen wird, in dem die somit getrockneten organisch modifizierten Schichtsilikate in ein Polymer eingearbeitet werden.
